# EUROPEAN PATENT SPECIFICATION

(11) **EP 1 897 667 B1**
(45) Date of publication and mention of the grant of the patent: **21.12.2011**
(21) Application number: 07115694.7
(22) Date of filing: 05.09.2007
(51) Int. Cl.: B27M 1/08, B27D 5/00, B27F 1/06, B27C 5/02

(54) **Working machine**
Bearbeitungsmaschine
Machine outil

(30) Priority: 06.09.2006 IT MO20060270
(43) Date of publication of application: 12.03.2008
(73) Proprietor: SCM Group S.p.A., 47900 Rimini (RN) (IT)
(72) Inventor: Coltro, Davide, 36010 Monticello Conte Otto (VI) (IT)
(74) Representative: Crugnola, Pietro

(56) References cited:
- EP-A- 0 506 621
- EP-A- 1 479 489
- DE-A1- 19 741 163

## Description

The invention relates to a working machine for machining edges of workpieces made of wood or similar materials, according to the preamble of claim 1. Such a machine is known from EP 0506621 A2.

These working machines comprise a milling unit provided with cutting tools for milling the sides of the workpiece and an edgebanding unit for applying, by means of gluing, an edge made of plastics to each side of the workpiece.

These machines further comprise a detecting apparatus for detecting a dimension of the machined workpiece that is transverse to an advance direction of the latter.

This is necessary for checking that the actual dimension of the machined workpiece corresponds to a reference dimension. In fact, it often happens that this actual dimension deviates from the reference dimension due to incorrect positioning of the milling unit or of the edgebanding unit and/or due to non-optimum adjustment of these units and/or due to wear of the cutting tools and/or due to incorrect dosing of the glue and/or due to variations in the thickness of the edges to be applied or for still other reasons.

Known detecting apparatuses comprise cameras or laser devices, which are particularly complex, difficult to install and to adjust and are excessively costly.

EP-A-0 506 621 discloses a system for measuring, monitoring and comparing the dimensions of panels. The system comprises an intermediate station located in line with and preceding a borer, consisting in a deck that occupies a common plane with the path followed by the panels and affords a pair of vertical stops serving to arrest the panel as well as functioning as a datum for its measurement on two axes, by means of a plurality of contact sensors.

An object of the invention is to improve the working machines for machining edges of workpieces made of wood, or similar materials, in particular edgebanding machines and squaring edgebanding machines.

A further object is to provide working machines provided with detecting apparatuses that are simple and of moderate cost.

According to the invention, a working machine for machining edges of workpieces made of wood, or similar materials is provided, as defined in claim 1.

In the invention the detecting means comprises feeler pin means connected to transducing means.

This enables extremely simple and cheap detecting means to be made.

The invention can be better understood and implemented with reference to the attached drawings in which an embodiment of the invention is shown by way of non-limiting example, in which:
Figure 1 is a schematic and fragmentary top view of a working machine provided with detecting means;
Figure 2 is a fragmentary, enlarged and schematic view of a workpiece machined by the working machine of Figure 1.

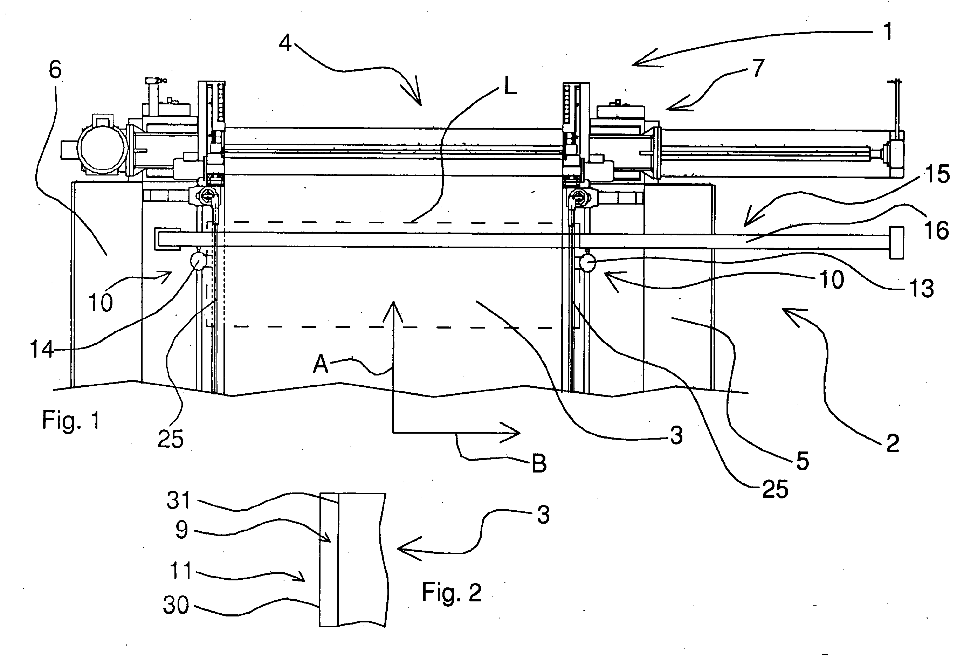

With reference to Figure 1 an end portion 2 of a working machine 1 is shown, for example an edgebanding or squaring edgebanding machine.

The working machine 1 is used in the woodworking industry to perform edgebanding operations on a workpiece 3 (shown by a broken line) made of wood, or similar materials, such as, for example, a panel, a table, a flat element or the like.

The working machine 1 comprises a frame 4 provided with a first upright 5 and with a second upright 6 that are mutually opposite.

The first upright 5 is drivable by driving means 7 along an operating direction B, substantially perpendicular to an advance direction A of the workpieces 3 along the working machine 1, towards and away from the second upright 6, in order to machine workpieces 3 of different sizes.

The working machine 1 further comprises movement means 25, associated with the first upright 5 and with the second upright 6, arranged for moving the workpieces 3 along the advance direction A.

The movement means 25 is provided with pressing means, which is not shown, arranged for retaining the workpieces 3 both during the edgebanding operations and during detecting operations, as will be disclosed below.

The working machine 1 further comprises machining units, which are not shown, moved by respective motor means.

These machining units comprise a milling unit provided with milling tools for milling sides 9 of the workpiece 3 and an edgebanding unit provided with edgebanding tools for applying edges 11 to the sides 9 by means of gluing and then finishing the edges 11, such as, for example, belts, strips, lists, or the like, made of plastics or similar materials.

The machining units are associated with the frame 4 and are positioned along the advance direction A upstream of the end portion 2, from which it is possible to remove the finished workpieces 3, i.e. the workpieces provided with edges 11. The working machine 1 further comprises detecting means 10 arranged for contacting external surfaces 30 of the edges 11 for detecting a dimension L of the workpiece 3 that is transverse to the advance direction A.

In this way, it is possible to check that the dimension L of the finished workpiece 3 corresponds to a desired reference dimension.

In fact, the dimension L may wander from the reference dimension due to incorrect positioning of the machining units and/or due to non-optimal adjustment of these, units and/or due to wear of the milling tools and/or due to incorrect dosing of the glue and/or variations to the thickness of the edges 11, or for other reasons.

The detecting means 10 comprises feeler pin means 13, 14, positioned downstream of the edgebanding unit with respect to the advance direction A, arranged per contacting the external surfaces 30, such external surfaces 30 extending substantially parallel to the advance direction A.

The feeler pin means comprises a first feeler pin 13 and a second feeler pin 14 associated respectively with the first upright 5 and with the second upright 6, each arranged for contacting a respective edge 11.

The detecting means 10 further comprises transducing means 15 supported by a support 16 extending parallel to the operating direction B.

The transducing means 15 is connected to the feeler pin means 13, 14 and may comprise magnetic transducers, such as, for example, a magnetic band, capacitive transducers, electric transducers, an optical scale, or the like.

The transducing means 15 is arranged for sending a signal corresponding to the dimension L detected by the feeler pin means 13, 14 to processing means, which is not shown.

The processing means processes the signal and compares the detected dimension L with the reference dimension.

If the processing means detects a deviation between the detected dimension L and the reference dimension it is possible to display this deviation on displaying means, which is not shown, with which the working machine 1 is provided.

On this displaying means it is also possible to display only the dimension L, or a series of instructions that an operator has to perform to reposition the machining units correctly manually according to the detected deviation.

It is also possible to reposition these machining units automatically, according to the deviation detected between the dimension L and the reference dimension, by feedback means, which is not shown, connected to the processing means.

The working machine 1 further comprises warning means, which is not shown, for example acoustic or luminous, arranged for warning the operator when the detected deviation exceeds a threshold value so that the operator can intervene rapidly and stop, if necessary, the working machine 1.

In an embodiment of the invention, which is not shown, the feeler pin means 13, 14 is provided with indicating means, for example comprising an index or a graduated scale, to indicate the conformity or non conformity of the dimension L to the reference dimension.

It should be noted how the detecting means 10 included in the working machine 1 is particularly simple and cheap.

It should also be noted how by means of the detecting means 10 it is possible to check continuously the workpieces 3 being machined.

## Claims

1. Working machine for machining edges (9, 11) of workpieces (3) made of wood, or similar materials, comprising movement means (25) for moving said workpieces (3) along an advance direction (A) and detecting means (10) arranged for contacting said edges (9, 11) for detecting a dimension (L) of said workpieces (3) that is transverse to said advance direction (A), wherein said detecting means (10) comprises feeler pin means (13, 14), **characterised in that** said feeler pin means (13, 14) comprises only a first feeler pin (13) and a second feeler pin (14), which are mutually opposite, each arranged for contacting one of said edges (9, 11) so as to make possible to check continuously said workpieces (3) being machined.

2. Machine according to claim 1, wherein said feeler pin means (13, 14) comprises indicating means for indicating the conformity or non conformity of said dimension (L) with respect to a reference dimension.

3. Machine according to claim 1, or 2, wherein said detecting means (10) comprises transducing means (15) connected to said feeler pin means (13, 14) and arranged for processing a signal corresponding to said dimension (L) detected by said feeler pin means (13, 14).

4. Machine according to claim 3, wherein said transducing means (15) comprises magnetic transducers.

5. Machine according to claim 3, wherein said transducing means (15) comprises capacitive transducers.

6. Machine according to claim 3, wherein said transducing means (15) comprises electric transducers.

7. Machine according to claim 3, wherein said transducing means (15) comprises an optical scale.

8. Machine according to any one of claims 3 to 7, and comprising processing means arranged for processing said signal and for comparing said dimension (L) with said reference dimension.

9. Machine according to claim 8, wherein said processing means is connected to feedback means arranged for automatically repositioning machining units of said working machine (1) according to a deviation detected between said dimension (L) and said reference dimension.

10. Machine according to any preceding claim, and comprising display means for displaying said dimension (L).

11. Machine according to claim 10 as appended to claim 9, wherein said displaying means displays said deviation between said dimension (L) and said reference dimension.

12. Machine according to claim 10, or 11, wherein said displaying means displays instructions readable by an operator for manually repositioning said operating units when said deviation is detected.

13. Machine according to claim 12, and comprising warning means for warning an operator when said deviation exceeds a threshold value.

14. Machine according to claim 13, wherein said warning means comprises acoustic warning means.

15. Machine according to claim 13, or 14, wherein said warning means comprises luminous warning means.

16. Machine according to any preceding claim, and comprising an edgebanding unit for performing edgebanding tasks on said workpieces (3) positioned upstream of said detecting means (10) with respect to said advance direction (A).

17. Machine according to claim 16, wherein said detecting means (10) contacts an external surface (30) of edges (11) applied by said edgebanding unit to said workpieces (3).

18. Machine according to any preceding claim, and comprising a milling unit for performing milling tasks on sides (9) of said workpieces (3).

19. Machine according to claim 18, and comprising further detecting means, positioned downstream of said milling unit with respect to said advance direction (A), arranged for contacting a further external surface (31) of said sides (9).

20. Machine according to any preceding claim, wherein said workpieces (3) are panels.

## Patentansprüche

1. Bearbeitungsmaschine zum Bearbeiten von Kanten (9, 11) von Werkstücken (3) aus Holz oder ähnlichen Materialien, die ein Bewegungsmittel (25) zum Bewegen der Werkstücke (3) entlang einer Förderrichtung (A) und ein Erfassungsmittel (10) umfasst, das zum Kontaktieren der Kanten (9, 11) zum Erfassen einer Abmessung (L) der Werkstücke (3) ausgestaltet ist, die quer zu der Förderrichtung (A) liegt, wobei das Erfassungsmittel (10) ein Tasterstiftmittel (13, 14) umfasst, **dadurch gekennzeichnet, dass** das Tasterstiftmittel (13, 14) nur einen ersten Tasterstift (13) und einen zweiten Tasterstift (14) umfasst, die zueinander entgegengesetzt liegen, wobei jeder zum Kontaktieren von einer der Kanten (9, 11) ausgestaltet ist, um zu ermöglichen, die Werkstücke (3), die bearbeitet werden, kontinuierlich zu prüfen.

2. Maschine nach Anspruch 1, bei welcher das Tasterstiftmittel (13, 14) ein Anzeigemittel zum Anzeigen der Übereinstimmung oder der Nichtübereinstimmung der Abmessung (L) bezüglich einer Referenzabmessung umfasst.

3. Maschine nach einem der Ansprüche 1 oder 2, bei welcher das Erfassungsmittel (10) ein Messwandelmittel (15) umfasst, das mit dem Tasterstiftmittel (13, 14) verbunden ist und zum Verarbeiten eines Signals ausgestaltet ist, das der Abmessung (L) entspricht, die durch das Tasterstiftmittel (13, 14) erfasst wird.

4. Maschine nach Anspruch 3, bei welcher das Messwandelmittel (15) magnetische Messwandler umfasst.

5. Maschine nach Anspruch 3, bei welcher das Messwandelmittel (15) kapazitive Messwandler umfasst.

6. Maschine nach Anspruch 3, bei welcher das Messwandelmittel (15) elektrische Messwandler umfasst.

7. Maschine nach Anspruch 3, bei welcher das Messwandelmittel (15) eine optische Skala umfasst.

8. Maschine nach einem der Ansprüche 3 bis 7, und die ein Verarbeitungsmittel umfasst, das zum Verarbeiten des Signals und zum Vergleichen der Abmessung (L) mit der Referenzabmessung ausgestaltet ist.

9. Maschine nach Anspruch 8, bei welcher das Verarbeitungsmittel mit einem Rückkoppelmittel verbunden ist, das zum automatischen Neupositionieren von Bearbeitungseinheiten der Bearbeitungsmaschine (1) gemäß einer Abweichung ausgestaltet ist, die zwischen der Abmessung (L) und der Referenzabmessung erfasst wird.

10. Maschine nach einem der vorstehenden Ansprüche, und die ein Anzeigemittel zum Anzeigen der Abmessung (L) umfasst.

11. Maschine nach Anspruch 10, soweit von Anspruch 9 abhängig, bei welcher das Anzeigemittel die Abweichung zwischen der Abmessung (L) und der Referenzabmessung anzeigt.

12. Maschine nach einem der Ansprüche 10 oder 11, bei welcher das Anzeigemittel Anweisungen anzeigt, die von einem Anwender zum manuellen Neupositionieren der Bearbeitungseinheiten lesbar sind, wenn die Abweichung erfasst wird.

13. Maschine nach Anspruch 12, und die ein Warnmittel zum Warnen eines Anwenders umfasst, wenn die Abweichung einen Schwellwert überschreitet.

14. Maschine nach Anspruch 13, bei welcher das Warnmittel ein akustisches Warnmittel umfasst.

15. Maschine nach einem der Ansprüche 13 oder 14, bei welcher das Warnmittel ein leuchtendes Warnmittel umfasst.

16. Maschine nach einem der vorstehenden Ansprüche, und die eine Kantenbindeeinheit zum Durchführung von Kantenbindeaufgaben an den Werkstücken (3) umfasst, die dem Erfassungsmittel (10) vorgelagert bezüglich der Förderrichtung (A) angeordnet ist.

17. Maschine nach Anspruch 16, bei welcher das Erfassungsmittel (10) eine äußere Oberfläche (30) von Kanten (11) kontaktiert, die durch die Kantenbindeeinheit an den Werkstücken (3) angelegt sind.

18. Maschine nach einem der vorstehenden Ansprüche, und die eine Fräseinheit zum Durchführen von Fräsaufgaben an Seiten (9) der Werkstücke (3) umfasst.

19. Maschine nach Anspruch 18, und die ein weiteres Erfassungsmittel umfasst, das nachgelagert zu der Fräseinheit bezüglich der Förderrichtung (A) angeordnet ist, das zum Kontaktieren einer weiteren äußeren Oberfläche (31) der Seiten (9) ausgestaltet ist.

20. Maschine nach einem der vorstehenden Ansprüche, bei welcher die Werkstücke (3) Platten sind.

## Revendications

1. Machine-outil pour l'usinage de chants (9, 11) de pièces (3) à usiner en bois ou en matériaux similaires, comprenant des moyens de déplacement (25) pour déplacer lesdites pièces (3) à usiner dans une direction de progression (A) et des moyens de détection (10) agencés pour venir en contact avec lesdits chants (9, 11) afin de détecter une dimension (L) desdites pièces (3) à usiner qui est transversale à ladite direction de progression (A), dans laquelle lesdits moyens de détection (10) comprennent des moyens de palpeur (13, 14), ***caractérisée en ce que*** lesdits moyens de palpeur (13, 14) comprennent uniquement un premier palpeur (13) et un deuxième palpeur (14), qui sont opposés l'un à l'autre, chacun agencé pour entrer en contact avec l'un desdits chants (9, 11) afin de rendre possible la vérification en continu desdites pièces (3) qui sont usinées.

2. Machine-outil selon la revendication 1, dans laquelle lesdits moyens de palpeur (13, 14) comprennent des moyens indicateurs pour indiquer la conformité ou la non conformité de ladite dimension (L) par rapport à une dimension de référence.

3. Machine-outil selon la revendication 1 ou 2, dans laquelle lesdits moyens de détection (10) comprennent des moyens transducteurs (15) raccordés auxdits moyens de palpeur (13, 14) et agencés pour traiter un signal correspondant à ladite dimension (L) détectée par lesdits moyens de palpeur (13, 14).

4. Machine-outil selon la revendication 3, dans laquelle lesdits moyens transducteurs (15) comprennent des transducteurs magnétiques.

5. Machine-outil selon la revendication 3, dans laquelle lesdits moyens transducteurs (15) comprennent des transducteurs capacitifs.

6. Machine-outil selon la revendication 3, dans laquelle lesdits moyens transducteurs (15) comprennent des transducteurs électriques.

7. Machine-outil selon la revendication 3, dans laquelle lesdits moyens transducteurs (15) comprennent une règle optique.

8. Machine-outil selon l'une quelconque des revendications 3 à 7, et comprenant des moyens de traitement agencés pour traiter ledit signal et pour comparer ladite dimension (L) avec ladite dimension de référence.

9. Machine-outil selon la revendication 8, dans laquelle lesdits moyens de traitement sont raccordés à des moyens de rétroaction prévus pour repositionner automatiquement des unités d'usinage de ladite machine-outil (1) en fonction d'un écart détecté entre ladite dimension (L) et ladite dimension de référence.

10. Machine-outil selon l'une quelconque des revendications précédentes, et comprenant des moyens d'affichage pour afficher ladite dimension (L).

11. Machine-outil selon la revendication 10 lorsqu'elle est dépendante de la revendication 9, dans laquelle lesdits moyens d'affichage affichent ledit écart entre ladite dimension (L) et ladite dimension de référence.

12. Machine-outil selon la revendication 10 ou 11, dans laquelle lesdits moyens d'affichage affichent des instructions lisibles par un opérateur pour repositionner manuellement lesdites unités d'usinage lorsque ledit écart est détecté.

13. Machine-outil selon la revendication 12, et comprenant des moyens d'avertissement pour avertir un opérateur lorsque ledit écart excède une valeur de seuil.

14. Machine-outil selon la revendication 13, dans laquelle lesdits moyens d'avertissement comprennent des moyens d'avertissement sonore.

15. Machine-outil selon la revendication 13 ou 4, dans laquelle lesdits moyens d'avertissement comprennent des moyens d'avertissement lumineux.

16. Machine-outil selon l'une quelconque des revendications précédentes, et comprenant une unité de placage de chants destinée à effectuer des tâches de placage de chants sur lesdites pièces (3) à usiner, positionnée en amont desdits moyens détecteurs (10) par rapport à ladite direction de progression (A).

17. Machine-outil selon la revendication 16, dans laquelle lesdits moyens détecteurs (10) entrent en contact avec une surface externe (30) des chants (11) appliqués par ladite unité de placage de chants sur lesdites pièces à usiner (3).

18. Machine-outil selon l'une quelconque des revendications précédentes, et comprenant une unité de fraisage destinée à effectuer des tâches de fraisage sur des bords (9) desdites pièces à usiner (3).

19. Machine-outil selon la revendication 18, et comprenant d'autres moyens de détection, positionnés en aval de ladite unité de fraisage par rapport à ladite direction de progression (A), et prévus pour entrer en contact avec une autre surface externe (31) desdits bords (9).

20. Machine-outil selon l'une quelconque des revendications précédentes, dans laquelle lesdites pièces à usiner (3) sont des panneaux.
